Europäisches Patentamt

**European Patent Office**

Office européen des brevets

(19)

(11) Veröffentlichungsnummer : **0 093 903**
**B1**

(12)

# EUROPÄISCHE PATENTSCHRIFT

(45) Veröffentlichungstag der Patentschrift :
**12.11.86**

(21) Anmeldenummer : **83103818.7**

(22) Anmeldetag : **20.04.83**

(51) Int. Cl.⁴ : **C 08 L 77/00**, C 08 L 75/04,
C 08 K   3/02

(54) **Flammfeste Polyamid- oder Polyurethan-Formmassen.**

(30) Priorität : **28.04.82 DE 3215750**

(43) Veröffentlichungstag der Anmeldung :
**16.11.83 Patentblatt 83/46**

(45) Bekanntmachung des Hinweises auf die Patenterteilung : **12.11.86 Patentblatt 86/46**

(84) Benannte Vertragsstaaten :
**CH DE FR GB IT LI NL**

(56) Entgegenhaltungen :
**DE-B- 1 965 635**
**FR-A- 2 314 216**
**FR-A- 2 367 100**
**FR-A- 2 378 817**
**US-A- 3 249 563**

(73) Patentinhaber : **BASF Aktiengesellschaft**
**Carl-Bosch-Strasse 38**
**D-6700 Ludwigshafen (DE)**

(72) Erfinder : **Theysohn, Rainer, Dr.**
**Am Bruch 38**
**D-6710 Frankenthal (DE)**
Erfinder : **Reimann, Horst, Dr.**
**Adelheidstrasse 26**
**D-6520 Worms (DE)**

**Beschreibung**

Die Erfindung betrifft flammfeste thermoplastische Polyamid- oder Polyurethan-Formmassen, die als Flammschutzmittel roten Phosphor und ein Trägerharz enthalten.

Es ist bekannt, daß roter Phosphor ein wirksames Flammschutzmittel für verstärkte und unverstärkte Polyamid- und Polyurethan-Formmassen ist. Ein wesentlicher Vorteil des Phosphors gegenüber üblichen Flammschutzmitteln auf Basis von Halogenverbindungen liegt darin, daß er die elektrischen Eigenschaften der Formmassen, insbesondere die Kriechstromfestigkeit, kaum beeinträchtigt.

Feinpulvriger roter Phosphor neigt jedoch bekanntlich bei Reibung oder Kontakt mit heißen Metallflächen zur Entzündung oder zu Staubexplosionen, so daß bei der Handhabung aufwendige Vorsichtsmaßnahmen getroffen werden müssen. Außerdem kann der Phosphor — insbesondere bei erhöhten Temperaturen und über längere Zeiträume hinweg — disproportionieren oder oxidieren, wobei Phosphorwasserstoff und Sauerstoffsäuren des Phosphors gebildet werden. Letztere können zur Bildung von elektrisch leitenden Belägen führen.

Es wurden nun schon verschiedene Maßnahmen vorgeschlagen, mit denen diese Erscheinungen entgegengewirkt werden soll. Am vielversprechendsten erscheint die Einbettung des Phosphors in ein Trägerharz. Derartige Flammschutzmittelkonzentrate sind staubfrei, rieselfähig und schlagunempfindlich, bei der Einarbeitung in den Kunststoff umhüllt das Trägerharz den Phosphor und schützt ihn gegen den Kontakt mit Luft und vor hoher Scherung.

In den DE-B-2 625 673, DE-B-2 625 691 und DE-B-2 734 103 wird die Verwendung von Phenol-Formaldehyd-Harzen als Trägerharz empfohlen. Es hat sich aber gezeigt, daß Phenolharze die Kriechstromfestigkeit von Formmassen herabsetzen, so daß diese für manche Anwendungszwecke, vor allem zur Herstellung von Formteilen für die Elektroindustrie, nur beschränkt eingesetzt werden können.

Im Beispiel 7 der DE-B-2 625 691 wird als Trägerharz für den Phosphor ein Copolyamid aus Caprolactam, Sebacinsäure, Adipinsäure und Hexamethylendiamin mit einem mittleren Molekulargewicht von 20 000 eingesetzt. Auch mit diesem hochmolekularem Copolyamid läßt sich keine ausreichende Stabilisierung des Phosphors erreichen.

Der Erfindung lag also die Aufgabe zugrunde, Trägerharze für roten Phosphor zu finden, welche die Kriechstromfestigkeit von Polyamid- oder Polyurethanformmassen nicht herabsetzen und eine gute Stabilisierung des Phosphors gegen Disproportionierung ermöglichen. Derartige Trägerharze sind niedermolekulare, niedrig schmelzende Polyamide, insbesondere endgruppenverkappte Copolyamide.

Gegenstand der Erfindung sind flammfeste thermoplastische Polyamid- oder Polyurethan-Formmassen, enthaltend

- A. 1 bis 10 Gew.-% roten Phosphor als Flammschutzmittel,
- B. 1 bis 15 Gew.-% eines Trägerharzes für den Phosphor, sowie
- C. 0,05 bis 5 Gew.-% einer anorganischen oder organischen Verbindung eines zwei- oder dreiwertigen Metalls als Stabilisator für den Phosphor,

wobei das Trägerharz B ein niedermolekulares Polyamid mit einem Molekulargewicht von 500 bis 10 000 und einem Schmelzpunkt zwischen 80 und 200 °C ist, dessen Endgruppen weitgehend verkappt sind.

Polyamide im Sinne der Erfindung sind vorzugsweise gesättigte, lineare Homopolyamide, wie z. B. Polycaprolactam (Polyamid-6), Polyhexamethylenadipinsäureamid (Polyamid-6,6), Polyhexamethylensebazinsäureamid, Polylaurinlactam, Polyundecanamid ; ferner Homo- und Copolyamide, die unter Verwendung von Adipinsäure, Acelainsäure, Sebazinsäure, Dodecandisäure oder Terephthalsäure einerseits und Hexamethylendiamin, Trimethylhexamethylendiamin, Bis-(4-aminocyclohexyl)-methan oder 2,2-Bis-(4-aminocyclohexyl)-propan andererseits hergestellt werden ; sowie Copolyamide, die durch Polykondensation von Lactamen zusammen mit den oben genannten Dicarbonsäuren und Diaminen erhalten werden ; außerdem Mischungen aus den genannten Polyamiden. Das Molekulargewicht der Polyamide liegt vorzugsweise oberhalb von 15 000, insbesondere zwischen 18 000 und 50 000.

Thermoplastisch verarbeitbare Polyurethane im Sinne der Erfindung sind vorzugsweise solche, die hergestellt wurden durch Polyaddition von 4,4'-Diphenylmethan-diisocyanat mit Diolen und weitere Umsetzung mit Polyester- bzw. Polyetherolen.

Die Formmassen enthalten 1 bis 10, vorzugsweise 2 bis 8 Gew.-% roten Phosphor als Flammschutzmittel. Es wird ein handelsüblicher roter Phosphor verwendet, der vorstabilisiert und/oder phlegmatisiert und/oder beschichtet sein kann. Die mittlere Größe der Phosphorpartikel liegt vorzugsweise zwischen 0,001 und 0,2 mm.

Sie enthalten vorzugsweise 0,05 bis 8, insbesondere 0,1 bis 3 Gew.-% eines Stabilisators für den Phosphor. Dieser Stabilisator ist eine anorganische oder organische Verbindung, vorzugsweise ein Oxid eines zwei- bis vierwertigen Metalls, insbesondere von Cadmium, Magnesium, Aluminium, Zink, Mangan, Titan oder Zinn. Besonders bevorzugt ist Cadmiumoxid.

Die Formmassen enthalten als Trägerharz erfindungsgemäß 1 bis 15, vorzugsweise 2 bis 10 Gew.-% eines niedermolekularen Polyamids mit einem Molekulargewicht von 500 bis 10 000, vorzugsweise von 800 bis 5 000 und einem Schmelzpunkt von 50 bis 200 °C, vorzugsweise von 80 bis 150 °C. Es hat sich gezeigt, daß die Wirksamkeit der Stabilisatoren für den Phosphor, insbesondere des Cadmiumoxids, erhöht werden kann, wenn man als Trägerharze niedermolekulare Polyamide einsetzt, deren $NH_2$- und

0 093 903

COOH-Endgruppen weitgehend verkappt sind. Bevorzugte Polyamide sind solche, die weniger als 20 mVal freie NH₂-Gruppen und zwischen 10 und 100, insbesondere zwischen 20 und 50 mVal freie COOH-Gruppen pro kg Polyamid enthalten. Die NH₂-Gruppen können mit Monocarbonsäuren oder deren Derivaten verkappt werden, was zur Ausbildung einer Amidendgruppe führt. Sie können auch mit Dicarbonsäuren verkappt werden, wobei Imidendgruppen entstehen, oder mit Harnstoffen. Bevorzugtes Verkappungsmittel ist Propionsäure. Die COOH-Gruppen können z. B. mit Monoaminoverbindungen verkappt werden oder mit Isocyanaten, wobei beidesmal Amid-Endgruppen entstehen. Man kann die COOH-Gruppe auch mit einem Diamin, z. B. Hexamethylendiamin umsetzen und die entstehende NH₂-Endgruppe dann wieder mit einer Monocarbonsäure verkappen. Der Schmelzpunkt des Polyamids muß unterhalb von 200 °C liegen ; deshalb sind Polyamid 6 und Polyamid 66 als Trägerharze nicht geeignet. Verwendet werden können z. B. niedermolekulares Polyamid 11 oder Polyamid 12, sowie Copolyamide, z. B. aus Caprolactam, Hexamethylendiamin und Adipinsäure. Diese Polyamide sind bei 150 bis 200 °C so niedrigviskos, daß der Phosphor ohne nennenswerte Scherung eingerührt werden kann. Sie haben ein hohes Aufnahmevermögen für Phosphor und sind thermisch genügend stabil.

Die Formmassen können ferner die üblichen Zusatzstoffe, wie Pigmente zum Überdecken der Eigenfarben des roten Phosphors, Verarbeitungshilfsmittel, Stabilisatoren sowie Füllstoffe enthalten. Als Füllstoffe kommen vorzugsweise Glasfasern in Frage, die mit einer Schlichte und einem Haftvermittler ausgerüstet sein können. Die Fasern können einen Durchmesser zwischen 6 und 20 μm aufweisen, die mittlere Glasfaserlänge im Spritzgußteil liegt vorzugsweise zwischen 0,08 und 0,5 mm. Als weitere Füllstoffe, die ebenfalls mit einem Haftvermittler beschichtet sein können, kommen Silikate, wie Talkum, Glimmer, Kaolin, calc. Kaolin, Zirkonsilikat in Frage, ferner Glaskugeln, Wollastonit, Quarzmehl und Kreide sowie Mischungen von Glasfasern mit Füllstoffen. Die Füllstoffe werden in Mengen von 10 bis 50 Gew.-%, bezogen auf die Formmasse, eingesetzt. Die Zusatzstoffe werden mit bekannten Verarbeitungsmaschinen, z. B. Extrudern oder anderen Knet- und Mischvorrichtungen in die Kunststoff-Schmelze eingearbeitet.

Bevorzugt werden Konzentrate verwendet, die durch Einmischen von Phosphor und/oder Stabilisator in eine Schmelze des Trägerharzes hergestellt wurden. Diese Konzentrate sind meist spröde, so daß sie leicht verschuppt oder gebrochen werden können.

Die erfindungsgemäßen Polyamid-Formmassen eignen sich zur Herstellung von Formteilen, insbesondere von solchen, die auf dem Elektrosektor eingesetzt werden.

Polyurethan-Formmassen können für nichtbrennbare, elastische Dämpfungselemente und Kabelisolierungen verwendet werden.

Die in den Beispielen genannten Teile und Prozente beziehen sich auf das Gewicht.

Beispiel 1

Folgende Copolyamide wurden als Trägerharze eingesetzt :

a) ein Copolyamid aus 50 Mol.-% Caprolactam, 30 Mol.-% Sebacinsäure/Hexamethylendiamin und 20 Mol.-% Adipinsäure/Hexamethylendiamin mit einem Schmelzpunkt von 150 °C und einem mittleren Molekulargewicht von 20 000 (nach Beispiel 7 der DE-B-2 625 691), NH₂-Endgruppengehalt 54 mVal · kg⁻¹, COOH-Endgruppengehalt 50 mVal · kg⁻¹.

b) ein Copolyamid aus 40 Mol.-% Caprolactam und 60 Mol.-% Adipinsäure/Hexamethylendiamin, welches 72 mVal/kg NH₂- und 64 mVal/kg COOH-Endgruppen aufweist, einen Schmelzpunkt von 160 °C und ein mittleres Molekulargewicht von 8 000 hat,

c) ein Copolyamid wie unter b) beschrieben, das aber nur 10 mVal/kg NH₂- und 24 mVal/kg COOH-Endgruppen aufweist.

Herstellung der Konzentrate

Je 400 g der Copolyamide wurden in einem Rührbehälter aufgeschmolzen und auf 180 °C gebracht. In die gerührte Schmelze wurden 600 g handelsüblicher roter Phosphor einer mittleren Teilchengröße von 30 μm und 30 g Cadmiumoxid einer mittleren Teilchengröße von 3 μm zugefügt. Die Mischung wurde noch 15 min weitergerührt, dann ausgetragen, abgekühlt, gebrochen und zu einer Korngröße von etwa 4 mm gemahlen.

Herstellung der Formmassen

Je 60 Gew.-Teile Polyamid 66 mit einem mittleren Molekulargewicht von 22 000 wurden auf einem Zweischneckenkneter ZSK der Fa. Werner und Pfleiderer aufgeschmolzen. Durch eine Öffnung wurden 30 Gew.-Teile Glasfasern mit einer Schnittlänge von 3 mm und mit einem Durchmesser von 10 μm, zusammen mit 10 Gew.-Teilen Konzentrat zugegeben. Die schmelzflüssige Mischung wurde in Strängen ausgetragen, abgekühlt, granuliert und getrocknet. Aus dem Granulat wurden bei 280 °C Normkleinstäbe gemäß DIN 53 453 spritzgegossen. Je 50 dieser Normkleinstäbe wurden in einem offenen Gefäß 200 Tage bei 60 °C in 100 ml Wasser gelagert, wobei die Wassermenge konstant gehalten wurde. Im Abstand von

3

50 Tagen wurden aus der wäßrigen Phase Probemengen entnommen, in denen die Gesamtmenge an gelöstem Gesamtphosphor gemessen wurde.

Ergebnisse

| Copolyamid | löslicher Gesamtphosphor (als P), gemessen nach | | |
| --- | --- | --- | --- |
| | 50 Tagen | 100 Tagen | 200 Tagen |
| a | 58 | 105 | 192 |
| b | 82 | 177 | 268 |
| c | 5 | 10 | 22 |

### Beispiel 2

85 Teile eines thermoplastischen Polyurethans (Elastollan 59 der Fa. Elastogran GmbH, Lemförde) wurden auf einem Zweischneckenextruder ZSK aufgeschmolzen ; in die Schmelze wurden 15 Teile Konzentrat gemäß Beispiel 1b und 1c zudosiert. Bei 210 °C wurden Normkleinstäbe gemäß DIN 53 453 spritzgegossen ; wie in Beispiel 1 beschrieben, wurden die Phosphor-Migrationswerte in Wasser bestimmt.

Ergebnisse

| Copolyamid | löslicher Gesamtphosphor, gemessen nach | | |
| --- | --- | --- | --- |
| | 50 Tagen | 100 Tagen | 200 Tagen |
| b | 53 | 187 | 315 |
| c | 24 | 77 | 95 |

## Patentansprüche

1. Flammfeste thermoplastische Polyamid- oder Polyurethan-Formmassen, enthaltend
   A. 1 bis 10 Gew.-% roten Phosphor als Flammschutzmittel,
   B. 1 bis 15 Gew.-% eines Trägerharzes für den Phosphor, sowie
   C. 0,05 bis 8 Gew.-% einer anorganischen oder organischen Verbindung eines zwei- bis vierwertigen Metalls als Stabilisator für den Phosphor,
dadurch gekennzeichnet, daß das Trägerharz B ein niedermolekulares Polyamid mit einem Molekulargewicht von 500 bis 10 000 und einem Schmelzpunkt zwischen 50 und 200 °C ist, dessen Endgruppen weitgehend verkappt sind.

2. Formmassen nach Anspruch 1, dadurch gekennzeichnet, daß die Endgruppen des niedermolekularen Polyamids derart verkappt sind, daß es weniger als 20 mVal freie $NH_2$-Gruppen und zwischen 10 und 100 mVal freie COOH-Gruppen pro kg enthält.

3. Formmassen nach Anspruch 1, dadurch gekennzeichnet, daß das niedermolekulare Polyamid ein Copolyamid aus Caprolactam, Adipinsäure und Hexamethylendiamin ist.

## Claims

1. A flame-retardant, thermoplastic polyamide or polyurethane moulding composition containing
   A. 1 to 10 % by weight of red phosphorus as flame retardant,
   B. 1 to 15 % by weight of a carrier resin for the phosphorus, and
   C. 0.05 to 8 % by weight of an inorganic or organic compound of a di- to tetravalent metal as stabilizer for the phosphorus,
wherein the carrier resin B is a low molecular weight polyamide which has a molecular weight of from 500 to 10,000 and a melting point of from 50 to 200 °C, and most of whose end groups are blocked.

2. A moulding composition as claimed in claim 1, wherein the end groups of the low molecular weight polyamide are blocked in such a way that it contains less than 20 milli-equivalents of free $NH_2$ groups and from 10 to 100 milli-equivalents of free COOH groups per kg.

3. A moulding composition as claimed in claim 1, wherein the low molecular weight polyamide is a copolyamide prepared from caprolactam, adipic acid and hexamethylenediamine.

## Revendications

1. Matières à mouler thermoplastiques ignifuges à base de polyamide ou de polyuréthane, contenant

A. 1 à 10 % en poids de phosphore rouge en tant qu'agent retardant les flammes,

B. 1 à 15 % en poids d'une résine de support pour le phosphore et

C. 0,05 à 8 % en poids d'un composé inorganique ou organique d'un métal bivalent à tétravalent en tant que stabilisant pour le phosphore,

caractérisées en ce que la résine de support B est un polyamide de bas poids moléculaire, ayant un poids moléculaire de 500 à 10 000 et un point de fusion compris entre 50 et 200 °C et dont les groupes terminaux sont masqués dans une large mesure.

2. Matières à mouler selon la revendication 1, caractérisées en ce que les groupes terminaux du polyamide de bas poids moléculaire sont masqués de telle manière que celui-ci présente moins de 20 mval de groupes $NH_2$ libres et entre 10 et 100 mval de groupes COOH par kg.

3. Matières à mouler selon la revendication 1, caractérisées en ce que le polyamide de bas poids moléculaire est un copolyamide de caprolactame, d'acide adipique et d'hexaméthylènediamine.

5